# EUROPEAN PATENT SPECIFICATION

(11) **EP 2 880 266 B1**
(45) Date of publication and mention of the grant of the patent: **12.10.2022**
(21) Application number: 13745390.8
(22) Date of filing: 01.08.2013
(51) Int. Cl.: F01D 15/08, F01D 15/10, F02C 7/36

(54) **DUAL-END DRIVE GAS TURBINE**
GASTURBINE MIT DOPPELENDENANTRIEB
TURBINE À GAZ À ENTRAÎNEMENT PAR LES DEUX EXTRÉMITÉS

(30) Priority: 03.08.2012 IT FI20120161
(43) Date of publication of application: 10.06.2015
(73) Proprietor: Nuovo Pignone S.r.l., 50127 Florence (IT)
(72) Inventor: GABELLONI, Marco Davide, I-FI 50127 Firenze (IT); ACQUISTI, Gianni, I-AR 52100 Arezzo (IT)
(74) Representative: Novagraaf Group
(86) International application number: PCT/EP2013/066168
(87) International publication number: WO 2014/020104

(56) References cited:
- EP-A2- 2 241 725
- WO-A1-2009/073838
- WO-A2-2005/003533
- US-A1- 2007 012 129
- US-B1- 8 049 353

## Description

### FIELD OF THE INVENTION

The embodiments disclosed relate generally to gas turbines. More specifically, the embodiments relate to systems comprising gas turbines and loads driven by said gas turbines, the loads being compressors.

### DESCRIPTION OF THE RELATED ART

Gas turbines are commonly used as mechanical power generators for driving a large variety of operating machines. More specifically, gas turbines are commonly used to drive large turbo machines, such as axial or centrifugal compressors. Typically gas turbines are applied in the field of natural gas liquefaction (LNG), CO₂ recovery and other sectors of the gas industry. Gas turbines are further used as mechanical power generators for driving electric generators.

WO 2005/003533 A2 discloses a gas turbine engine where output power is extracted in the form of thrust, electrical power or mechanical power.

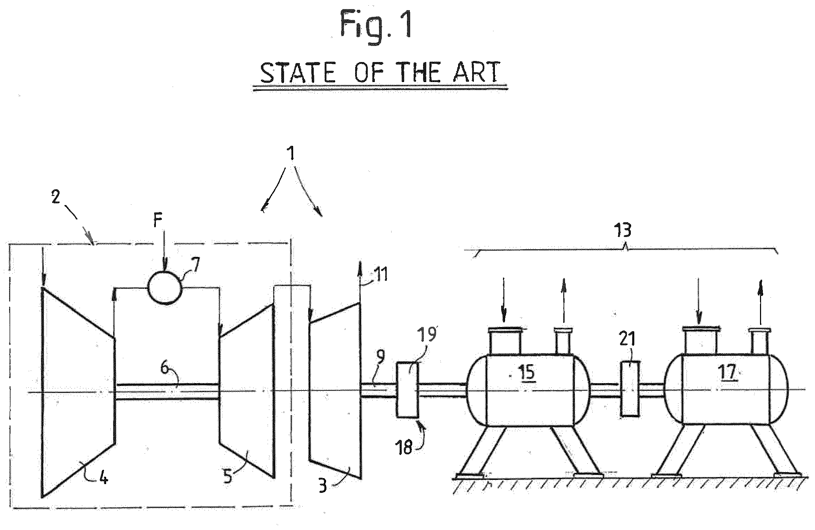

Fig. 1 shows a system comprising a gas turbine and a compressor train driven by the gas turbine according to the current art.

The gas turbine is labeled 1 as a whole and comprises a gas generator 2 and a power turbine 3. The gas generator 2 includes an air compressor 4 and a high pressure turbine 5, mechanically connected to one another by means of a shaft 6. Air sucked by the compressor 4 is compressed to a high pressure value and delivered to a combustor schematically shown in 7. Fuel is mixed to the compressed air in the combustor 7 and the mixture is burned to generate a flow of combustion gases at high temperature and high pressure.

The high temperature and high pressure combustion gases expand in the high pressure turbine 5 to generate mechanical power, which is used to drive the air compressor 4 via a shaft 6. The partly expanded combustion gases are further delivered to the power turbine 3, wherein they further expand to generate additional mechanical power available on a power shaft 9. The exhausted combustion gases are then discharged through an exhauster 11.

The mechanical power generated by the high pressure turbine 5 is used entirely to drive the air compressor 4, while the mechanical power generated by the power turbine 3 is available on the power shaft 9 to drive a load labeled 13 as a whole. In the example shown, the load 13 comprises a compressor train. The compressor train is comprised of a first compressor 15 and a second compressor 17, for example centrifugal compressors of a natural gas liquefaction system. In the schematic representation of Fig. 1 the two compressors 15 and 17 are arranged in series and driven at the same speed: power is transmitted, through a load coupling 18 comprising a joint 19, to the first compressor 15 and therefrom through a second joint 21 to the second compressor 17.

This arrangement has several drawbacks. In particular, the load coupling 18 must be sized and designed for the maximum power required to drive both compressors 15 and 17. Moreover, if the compressors are of the so called vertical split type, i.e. with a casing which is formed by two or more parts coupled along a vertical splitting plane, opening of the casing of the first compressor 15 requires the second compressor 17 to be moved away from the first compressor 15.

### SUMMARY OF THE INVENTION

The present invention is defined in the accompanying claims.

According to the invention, a gas turbine system according to claim 1 is provided, comprising inter alia a gas turbine and at least a first load and a second load powered by the gas turbine. The gas turbine comprises: a gas generator; a low pressure turbine; a power shaft powered by the low pressure turbine. The power shaft has a first shaft end drivingly connected to the first load and a second shaft end drivingly connected to the second load. The aforesaid first load and second load are arranged at opposite sides of the gas turbine and the power shaft axially extends through the gas turbine from a first and to a second end thereof.

In some embodiments, the gas turbine is an aeroderivative gas turbine.

The first shaft end and the second shaft end are generally arranged at the so-called hot end and cold end of the gas turbine. The hot end of the gas turbine is the end at the exhauster, i.e. on the combustion gases exit side from the low pressure turbine. The cold end of the gas turbine is the end where the inlet air plenum is arranged.

The term low pressure turbine indicates the portion of the turbomachinery where the combustion gases generated by the gas generator expand to produce power, available on the power shaft for load driving purposes. The term "low pressure" is generally used to distinguish this portion of the turbomachinery from the first, high pressure turbine, arranged directly downstream the combustion chamber, where the high-pressure, high-temperature combustion gases undergo a first expansion, for driving into rotation the gas generator shaft, which in turn drives the gas turbine compressor.

According to some embodiments, the gas turbine comprises in combination and sequentially arranged: a low pressure compressor; a high pressure compressor, arranged downstream of the low pressure compressor and receiving air compressed by said low pressure compressor; a combustor, arranged for receiving compressed air from the second, high pressure compressor, as well as a gaseous or liquid fuel; a high pressure turbine receiving combustion gases from the combustor and arranged for generating mechanical power from the combustion gases partially expanding therein, the high pressure turbine being in fluid communication with the low pressure turbine. The combustion gases from the high pressure turbine expand in the low pressure turbine. The gas turbine further comprises a second shaft drivingly connecting the high pressure turbine and the high pressure compressor. The power shaft and the second shaft are coaxially arranged, and the power shaft drivingly connects the low pressure turbine and the low pressure compressor.

In some embodiments, an air bleeding arrangement can be provided between the low pressure compressor and the high pressure compressor.

The first load and second load comprise a first compressor and a second compressor, respectively. Both the first compressor and the second compressor comprise a respective vertically split casing, i.e. each compressor is a barrel-type compressor.

By arranging two loads drivingly connected at opposite ends of a through shaft of the gas turbine, a vertically split compressor can be used, in replacement for a horizontally split compressor. This results in a higher efficiency of the system.

The compressors can be arranged and configured for processing at least one refrigeration gas in a system liquefaction of natural gas (LNG). The LNG system usually comprises one or more compressor trains, each driven by one or more gas turbine and comprising one or more compressors. The compressors are used to compress one or more different refrigerant fluids used for chilling and liquefying a natural gas for storage and/or transportation purposes. Therefore, some embodiments disclosed herein comprise: a gas turbine; at least two compressors driven by the gas turbine and arranged at opposite ends of the turbine, i.e. at the hot end and at the cold end of the turbine; at least one refrigeration circuit, wherein a refrigeration fluid flows, said refrigeration fluid being compressed by at least one of the afore mentioned compressors and flowing in at least one heat exchanger for cooling a natural gas to be liquefied.

In other embodiments, an air chilling system is provided, configured and arranged for chilling an air stream entering the gas generator. The chilling system comprises a refrigerating circuit with a compressor, which processes a refrigerating fluid circulating in the refrigerating circuit. The compressor of the refrigerating circuit is mechanically connected to one of the first shaft end and second shaft end of the gas turbine, forming one of the aforementioned first load and second load powered by the gas turbine. In some embodiments, the chilling system further comprises a heat exchanger, wherein the refrigerating fluid circulating in the refrigeration circuit exchanges heat with a secondary fluid, flowing in a secondary circuit. Said secondary circuit includes a fluid/air exchanger, wherein combustion air delivered to the gas turbine is chilled by exchanging heat with the secondary fluid flowing in the secondary circuit. Heat extracted from the air flow is transferred to the refrigerating fluid in an evaporator of the refrigeration circuit.

In preferred embodiments the compressor of the refrigerating circuit is drivingly connected to the first shaft end at said cold end of the gas turbine.

In an example not forming part of the present invention, at least one of the first load and second load comprises an electric generator. In some examples, the electric generator is arranged and configured to electrically power auxiliary apparatuses of the gas turbine. The electric generator can be drivingly connected to the first shaft end of the power shaft at the cold end of said gas turbine.

According to a further aspect, the present disclosure concerns methods for operating a gas turbine according to claim 9.

Further embodiments of the method according to the present disclosure are set forth in the dependent claims and described here below, reference being made to the accompanying drawings.

The above brief description sets forth features of various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

The scope of the invention is defined by the appended claims.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 illustrates a schematic representation of a system according to the current art;
Fig. 2 illustrates a cross-section along an axial plane of a gas turbine useful in a system according to the present disclosure;
Figs. 3 and 5 illustrate schematic representations of systems according to the present invention;
Fig. 4 illustrates an example of a system not forming part of the present invention.

### DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

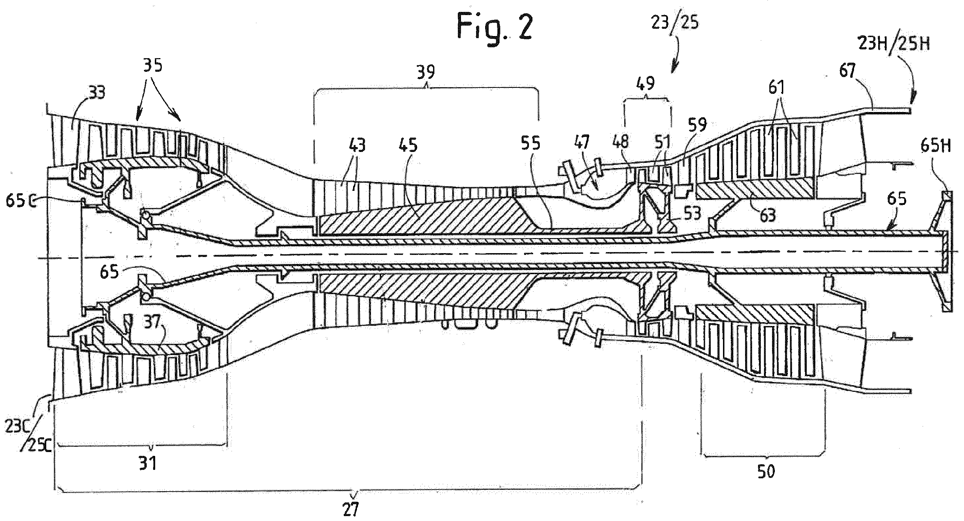

Fig.2 illustrates a longitudinal section of an aeroderivative gas turbines 23 suitable for use in a system according to the present invention. The gas turbine 23 comprises a gas generator section 27 comprised of a low-pressure axial compressor 31 with a set of stationary inlet blades 33 at the suction side. A plurality of low-pressure compression stages 35 are arranged downstream of the stationary inlet blades 33. Each low-pressure compression stage 35 comprises a set of rotary blades and a set of stationary blades. The rotary blades are supported by a low pressure compressor rotor 37 and the stationary blades are supported by an outer casing of the low-pressure axial compressor 31.

The low-pressure axial compressor 31 is in fluid communication with a high-pressure axial compressor 39 arranged downstream of the low-pressure axial compressor 31. The high-pressure axial compressor 39 comprises a plurality of high-pressure compression stages 43. Each high-pressure compression stage 43 comprises a set of rotary blades and a set of stationary blades. The rotary blades are supported by a high pressure compressor rotor 45. The stationary blades are supported by the casing of the high-pressure axial compressor 39.

The outlet of the high-pressure axial compressor 39 is in fluid communication with a combustor 47. Compressed air from the high-pressure axial compressor 39 flows into said combustor 47 and gaseous or liquid fuel is mixed therewith and the air/fuel mixture is ignited to generate compressed, hot combustion gases.

Downstream of the combustor 47 a first, high pressure turbine 49 is arranged in fluid communication with the combustor 47. The high pressure turbine 49 includes a set of stationary inlet blades 48 followed by one or more expansion stages 51, each including a set of stationary blades and a set of rotary blades. The rotary blades are supported by a high pressure turbine rotor 53. The high pressure turbine rotor 53 and the high pressure compressor rotor 45 are supported by and torsionally constrained to a gas-generator shaft 55.

Expansion of the combustion gases flowing from the combustor 47 through the high pressure turbine 49 generates mechanical power, which drives the gas-generator shaft 55 and is used to power the high-pressure axial compressor 39.

The outlet of the high pressure turbine 49 is in fluid communication with the inlet of a low pressure turbine 50. The combustion gases flowing through the high pressure turbine 49 are only partly expanded and their expansion continues in the low pressure turbine 50. The inlet of the low pressure turbine 50 includes a set of stationary blades 59 supported by the casing of the turbomachinery, followed by a plurality of low-pressure expansion stages 61. Each low-pressure expansion stage 61 includes a set of rotary blades and a set of stationary blades. The rotary blades are supported by a low pressure turbine rotor 63 and the stationary blades are supported by the casing of the gas turbine 23. The low pressure turbine rotor 63 is rotationally constrained to and supported by a power shaft 65. The power shaft 65 extends through the gas turbine and coaxially to the gas generator shaft 55. The low pressure compressor rotor 37 is supported by and constrained to the same power shaft 65.

The combustion gases expanding in the low pressure turbine 50 generate mechanical power available on the power shaft 65 and partly used to drive the low-pressure axial compressor 31. The power exceeding the one required to drive the low-pressure axial compressor 31 is available to drive the load.

As can be appreciated from Fig.2, the power shaft 65 extends from a first end 65C to an opposite second end 65H. The first end 65C of the power shaft 65 is arranged at the so-called cold end or cold side 23C of the gas turbine 23, i.e. at the cold air inlet side thereof. The second end 65H is arranged at the so-called hot end or hot side 23H of the gas turbine 23, i.e. at the side wherefrom the exhausted hot combustion gases are discharged at 67, after expansion in the high pressure turbine 49 and the low pressure turbine 50.

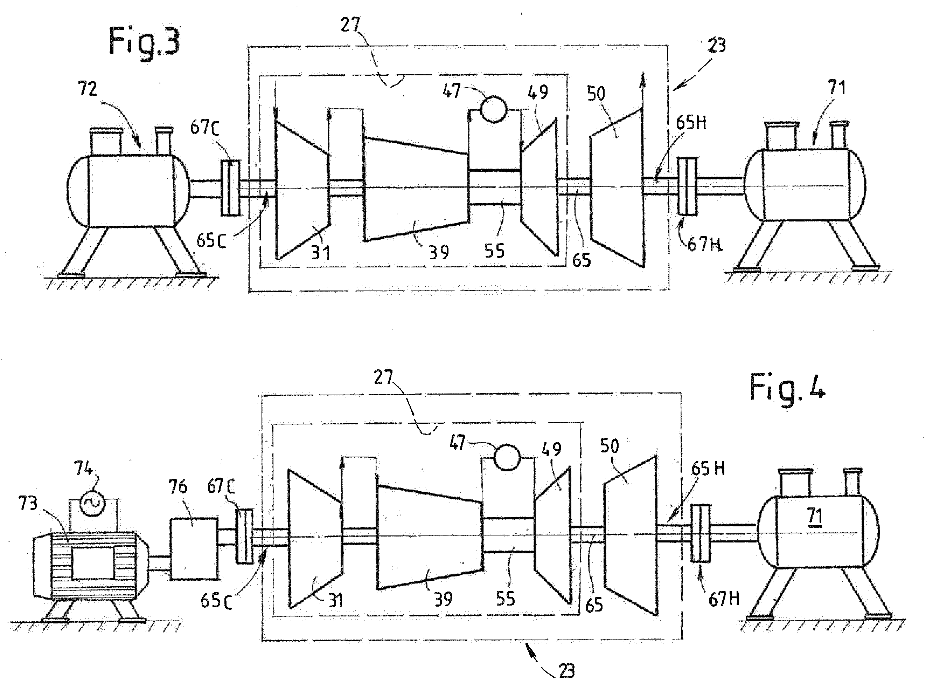

A gas turbine 23 of the kind illustrated in Fig. 2 can be used in a system schematically illustrated in Fig. 3.

In addition to the gas turbine 23, the system comprises a first load 71 and a second load 72. Both the first load 71 and the second load 72 are centrifugal compressors, for example of an LNG line. Both compressors 71 and 72 are of the vertical split type, with a casing designed to be opened along vertically extending planes. Since the two compressors 71 and 72 are connected on opposite sides of the gas turbine 23, each of them can be easily opened for repairing or maintenance purposes, without the need for the other compressor to be disassembled, removed or displaced.

The first compressor 71 is connected to the hot end or hot side 65H of the gas turbine 23 through a load coupling 67H comprising for example a joint, which might include a clutch or the like.

The second compressor 72 is connected to the cold end or cold side 65C of the gas turbine 23 by means of a second load coupling 67C, including for instance a joint, a clutch or both.

In the exemplary embodiment illustrated in Fig. 3, both compressors 71 and 72 are driven at the same rotary speed and in the same direction as the low pressure turbine 50. In other embodiments (not shown) a gearbox can be provided between the load coupling 67H and the respective compressor 71 and/or between the load coupling 65C and the compressor 72. The gearbox can be used to reverse the rotation direction and/or to modify the ratio between the turbine rotary speed and the rotary speed of the respective compressor 71 and/or 72.

In other embodiments (not shown), if more than two compressors must be driven by the same gas turbine 23, one or more additional compressors can be arranged at one or both ends 65H, 65C of the gas turbine 23.

Fig. 4 illustrates an example not forming part of the present invention.

The same reference numbers indicate the same or equivalent parts as in Fig. 3. More specifically, the example of Fig. 4 includes a gas turbine 23 comprising a gas generator 27 and a low pressure turbine 50.

The gas turbine 23 of Fig. 4 can be of the same kind shown in Fig. 2. The various components of the gas turbine 23 are not described again.

In the example of Fig. 4 a first load 71 and a second load 73 are drivingly connected to the hot side or hot end 65H and to the cold side or cold end 65C of the gas turbine 23, respectively. In the example illustrated in Fig. 4 the first load 71 is again a compressor, for example a centrifugal compressor, while the second load 73 is an electric generator. The electric generator 73 can be connected to an electric distribution grid 74. The electric grid 74 can be a local grid for powering electric facilities connected to the gas turbine 23 and/or to the plant in which the gas turbine 23 is arranged. In the example of Fig.4, a gearbox 76 is arranged between the gas turbine 23 and the electric generator 73, to increase the rotary speed. The compressor 71 can once again be a vertically split compressor, as schematically shown in the drawing.

In the example of Fig.4 the compressor 71 is arranged at the hot end of the gas turbine 23, while the electric generator 73 is arranged at the cold end of the gas turbine 23. In other examples, the position of the two loads 71, 73 can be reversed, with the compressor being arranged at the hot end of the gas turbine and the electric generator arranged at the hot end of the gas turbine.

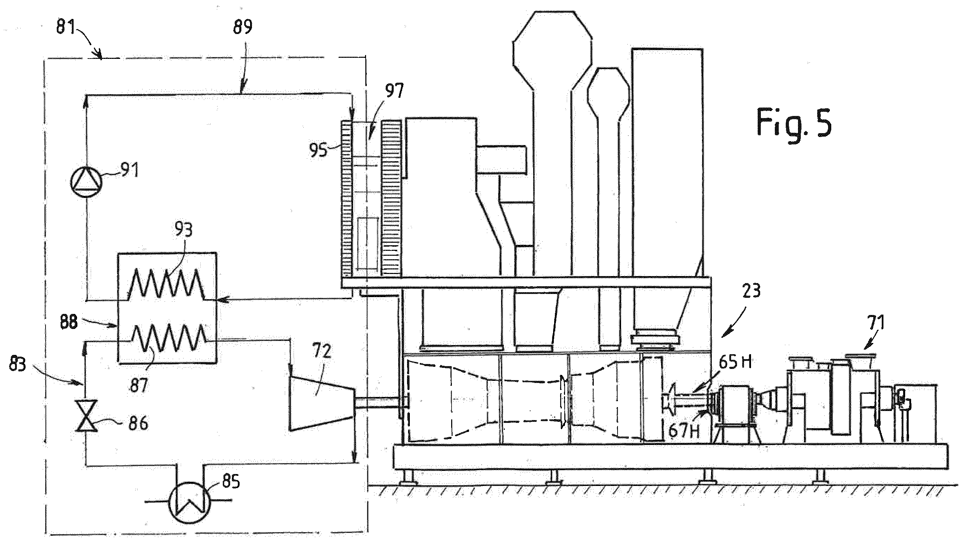

Fig. 5 schematically illustrates a further system including a gas turbine 23 as shown for example in Fig.2, a first load 71 and a second load 72. In the embodiment illustrated in Fig. 5 the first load 71 is again a compressor, for example a centrifugal compressor, driven by the power shaft 65 of the gas turbine 23 through a load coupling 67H arranged at the hot end or hot side 65H of the gas turbine 23.

In this embodiment the second load 72 comprises a compressor of a chilling system 81 designed and arranged for chilling the combustion air entering the gas turbine 23. In the embodiment illustrated in Fig. 5, the chilling system 81 comprises a refrigerating circuit 83 including the above mentioned compressor 72, a condenser 85, expander or a throttling valve 86 and an evaporator 87 forming part of a heat exchanger 88. A refrigerating fluid circulates in the refrigerating circuit 83, is compressed by compressor 72 and condensed in the condenser 85, heat being removed from the refrigerating fluid in the condenser 85 by means of heat exchange with air or water, for example. The refrigerated and condensed refrigerating fluid is then expanded in expander 86 and flows through the evaporator 87 to remove heat from a fluid circulating in a secondary circuit 89. The fluid circulating in the secondary circuit 89 can be for instance cooling water.

The secondary circuit 89 comprises a pump 91 which circulates the cooling fluid, e.g. water, through a heat exchanger 93 arranged to exchange heat in the heat exchanger 88 against the refrigerating fluid circulating in the refrigerating circuit 83. The water cooled in the heat exchanger 88 flows then through a second heat exchanger 95 arranged at the inlet of an air suction duct 97, through which the combustion air is sucked by the compressors 31 and 39. In this way, the combustion air contacts the water heat exchanger 95 which cools the air to a temperature lower than the ambient temperature, thereby increasing overall efficiency of the gas turbine 23. In advantageous embodiments, the chilling system 81 can be controlled such that the combustion air is maintained at a substantially constant air temperature when entering an air intake plenum at the cold end of the gas turbine 23, said air temperature being set in order to maximize the overall efficiency of the gas turbine 23.

Fig. 5 therefore illustrates an integrated chilling system, wherein the compressor of the refrigerating circuit is driven directly by the gas turbine. A separate electric motor for driving the chilling compressor can be dispensed with, making the system simpler, less cumbersome and with reduced footprint.

In a modification not according to the invention, not shown, the load 71 of the system shown in Fig.5 can be an electric generator instead of a compressor.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims. Hence, the proper scope of the disclosed innovations should be determined only by the appended claims.

## Claims

1. A gas turbine system, comprising:
a gas turbine (23);
at least a first load (72) and a second load (71) powered by said gas turbine (23) wherein said first load (72) and said second load (71) comprise a first compressor and a second compressor, respectively; and wherein both said first compressor and said second compressor comprise a respective vertically split casing; and wherein said gas turbine comprises:
a gas generator (27);
a low pressure turbine (50);
a power shaft (65) powered by said low pressure turbine (50), said power shaft (65) having a first shaft end (65C) drivingly connected to said first load (72) and a second shaft end (65H) drivingly connected to said second load (71), said first load (72) and said second load (71) being arranged at opposite sides of said gas turbine (23) and said power shaft (65) axially extending through said gas turbine (23) from a first end to a second end thereof.

2. A system according to claim 1, wherein said gas generator (27) comprises at least an air compressor (39), a combustor (47) and a high pressure turbine (49), said combustor (47) being arranged for receiving compressed air from said at least one air compressor (39) and fuel, combustion gases generated by said combustor (47) expanding in said high pressure turbine (49); wherein said power shaft (65) extends coaxially to said at least one air compressor (39) and said high pressure turbine (49).

3. A system according to claim 1, wherein said gas turbine (23) comprises in combination and sequentially arranged:
a low pressure compressor (31);
a high pressure compressor (39), sequentially arranged downstream of said low pressure compressor (31) for receiving air compressed by said low pressure compressor (31);
a combustor (47), arranged for receiving compressed air from said high pressure compressor (39), and fuel;
a high pressure turbine (49) receiving combustion gases from said combustor (47) and arranged for generating mechanical power from said combustion gases partially expanding therein, said high pressure turbine (49) being in fluid communication with said low pressure turbine (50), said combustion gases from said high pressure turbine (49) expanding in said low pressure turbine (50);
a second shaft (55) drivingly connecting said high pressure turbine (49) and said high pressure compressor (39);
wherein said power shaft (65) and said second shaft (55) are coaxially arranged, and said power shaft (65) drivingly connecting said low pressure turbine (50) and said low pressure compressor (31).

4. A system according to claim 3, comprising an air bleeding arrangement between said low pressure compressor (31) and said high pressure compressor (39).

5. A system according to any one of the preceding claims, wherein said first compressor and optionally said second compressor are arranged and configured for processing at least one refrigeration gas in a natural gas liquefaction system.

6. A system according to one or more of the preceding claims, comprising an air chilling system (81) arranged for chilling an air stream entering said gas generator (27); wherein said air chilling system comprises a refrigerating circuit (83) with a compressor processing a refrigerating fluid circulating in said refrigerating circuit (83); and wherein said compressor of said refrigerating circuit is mechanically connected to one of said first shaft end (65H) and second shaft end (65C), forming one of said first load (72) and second load (71) powered by said gas turbine (23).

7. A system according to one or more of the preceding claims, wherein said first shaft end (65C) is arranged at a cold end of said gas turbine and said second shaft end (65H) is arranged at a hot end of said gas turbine.

8. A system according to claim 7 when dependent on claim 6, wherein said compressor of said refrigerating circuit (83) is drivingly connected to said first shaft end (65C) at said cold end of the gas turbine (23).

9. A method of operating a gas turbine system comprising a load, the method comprising the following steps:
providing a gas generator (27), a low pressure turbine (50) and a power shaft (65) having a first shaft end (65C) and a second shaft end (65H) accessible at a first end and at a second end of said gas turbine (23), respectively;
drivingly connecting a first load (72) to said first shaft end (65C), and a second load (71) to said second shaft end (65H);
generating mechanical power by means of said low pressure turbine (50);
using a first part of said mechanical power through a first load coupling to drive said first load (72) and a second part of said mechanical power through a second load coupling to drive said second load (71);
wherein said first load (72) and said second load (71) comprise a first and a second compressor, respectively and wherein both said first compressor and said second compressor comprise a respective vertically split casing.

10. Method according to claim 9, comprising driving a compressor of a chilling system (81) through said power shaft (65), wherein said chilling system (81) comprises a compressor drivingly coupled to one end of said power shaft (65); and wherein said chilling system chills an intake air stream delivered to said gas turbine (23).

## Patentansprüche

1. Gasturbinensystem, umfassend:
eine Gasturbine (23);
mindestens eine erste Last (72) und eine zweite Last (71), die durch die Gasturbine (23) angetrieben werden, wobei die erste Last (72) und die zweite Last (71) einen ersten Verdichter bzw. einen zweiten Verdichter umfassen;
und wobei sowohl der erste Verdichter als auch der zweite Verdichter ein jeweiliges vertikal geteiltes Gehäuse umfassen; und wobei die Gasturbine umfasst:
einen Gasgenerator (27);
eine Niederdruckturbine (50);
eine Antriebswelle (65), die durch die Niederdruckturbine (50) angetrieben wird, wobei die Antriebswelle (65) ein erstes Wellenende (65C), das mit der ersten Last (72) antreibend verbunden ist, und ein zweites Wellenende (65H) aufweist, das mit der zweiten Last (71) antreibend verbunden ist, wobei die erste Last (72) und die zweite Last (71) an gegenüberliegenden Seiten der Gasturbine (23) angeordnet sind und die Antriebswelle (65) sich axial durch die Gasturbine (23) von einem ersten Ende zu einem zweiten Ende davon erstreckt.

2. System nach Anspruch 1, wobei der Gasgenerator (27) mindestens einen Luftverdichter (39), eine Brennkammer (47) und eine Hochdruckturbine (49) umfasst, wobei die Brennkammer (47) angeordnet ist, um komprimierte Luft von dem mindestens einen Luftverdichter (39) und Kraftstoff aufzunehmen, wobei Verbrennungsgase, die durch die Brennkammer (47) erzeugt werden, sich in der Hochdruckturbine (49) ausdehnen; wobei sich die Antriebswelle (65) koaxial zu dem mindestens einen Luftverdichter (39) und der Hochdruckturbine (49) erstreckt.

3. System nach Anspruch 1, wobei die Gasturbine (23) in Kombination und sequenziell angeordnet umfasst:
einen Niederdruckverdichter (31);
einen Hochdruckverdichter (39), der sequenziell stromabwärts des Niederdruckverdichters (31) angeordnet ist, um durch den Niederdruckverdichter (31) komprimierte Luft aufzunehmen;
eine Brennkammer (47), die zum Aufnehmen von komprimierter Luft von dem Hochdruckverdichter (39) und Kraftstoff angeordnet ist;
eine Hochdruckturbine (49), die Verbrennungsgase von der Brennkammer (47) aufnimmt und zum Erzeugen mechanischer Leistung aus den darin teilweise expandierenden Verbrennungsgasen angeordnet ist, wobei die Hochdruckturbine (49) in Fluidverbindung mit der Niederdruckturbine (50) steht, wobei sich die Verbrennungsgase von der Hochdruckturbine (49) in der Niederdruckturbine (50) ausdehnen;
eine zweite Welle (55), die die Hochdruckturbine (49) und den Hochdruckverdichter (39) antreibend verbindet;
wobei die Antriebswelle (65) und die zweite Welle (55) koaxial angeordnet sind und die Antriebswelle (65) die Niederdruckturbine (50) und den Niederdruckverdichter (31) antreibend verbindet.

4. System nach Anspruch 3, umfassend eine Entlüftungsanordnung zwischen dem Niederdruckverdichter (31) und dem Hochdruckverdichter (39).

5. System nach einem der vorstehenden Ansprüche, wobei der erste Verdichter und optional der zweite Verdichter zum Verarbeiten mindestens eines Kühlgases in einem Erdgasverflüssigungssystem angeordnet und konfiguriert sind.

6. System nach einem oder mehreren der vorstehenden Ansprüche, umfassend ein Luftkühlsystem (81), das zum Kühlen eines Luftstroms angeordnet ist, der in den Gasgenerator (27) eintritt; wobei das Luftkühlsystem einen Kühlkreislauf (83) mit einem Verdichter, der ein in dem Kühlkreislauf (83) zirkulierendes Kühlfluid verarbeitet, umfasst und wobei der Verdichter des Kühlkreislaufs mechanisch mit einem des ersten Wellenendes (65H) und des zweiten Wellenendes (65C) verbunden ist, wobei eine der ersten Last (72) und der zweiten Last (71), die durch die Gasturbine (23) angetrieben wird, ausgebildet wird.

7. System nach einem oder mehreren der vorstehenden Ansprüche, wobei das erste Wellenende (65C) an einem kalten Ende der Gasturbine angeordnet ist und das zweite Wellenende (65H) an einem heißen Ende der Gasturbine angeordnet ist.

8. System nach Anspruch 7, wenn abhängig von Anspruch 6, wobei der Verdichter des Kühlkreislaufs (83) mit dem ersten Wellenende (65C) an dem kalten Ende der Gasturbine (23) antreibend verbunden ist.

9. Verfahren zum Bedienen eines Gasturbinensystems, eine Last umfassend, wobei das Verfahren die folgenden Schritte umfasst:
Bereitstellen eines Gasgenerators (27), einer Niederdruckturbine (50) und einer Antriebswelle (65) mit einem ersten Wellenende (65C) und einem zweiten Wellenende (65H), die an einem ersten Ende bzw. an einem zweiten Ende der Gasturbine (23) zugänglich sind;
antreibend Verbinden einer ersten Last (72) mit dem ersten Wellenende (65C) und einer zweiten Last (71) mit dem zweiten Wellenende (65H);
Erzeugen mechanischer Energie mittels der Niederdruckturbine (50);
Verwenden eines ersten Teils der mechanischen Energie durch eine erste Lastkopplung, um die erste Last (72) anzutreiben, und eines zweiten Teils der mechanischen Energie durch eine zweite Lastkopplung, um die zweite Last (71) anzutreiben;
wobei die erste Last (72) und die zweite Last (71) einen ersten bzw. einen zweiten Verdichter umfassen und wobei sowohl der erste Verdichter als auch der zweite Verdichter ein jeweiliges vertikal geteiltes Gehäuse umfassen.

10. Verfahren nach Anspruch 9, umfassend das Antreiben eines Verdichters eines Kühlsystems (81) durch die Antriebswelle (65), wobei das Kühlsystem (81) einen Verdichter umfasst, der antreibend mit einem Ende der Antriebswelle (65) gekoppelt ist; und wobei das Kühlsystem einen Ansaugluftstrom kühlt, der an die Gasturbine (23) abgegeben wird.

## Revendications

1. Système de turbine à gaz, comprenant :
une turbine à gaz (23) ;
au moins une première charge (72) et une seconde charge (71) alimentées par ladite turbine à gaz
(23) dans lequel ladite première charge (72) et ladite seconde charge (71) comprennent un premier compresseur et un second compresseur, respectivement ; et dans lequel à la fois ledit premier compresseur et ledit second compresseur comprennent un carter séparé verticalement respectif ; et dans lequel ladite turbine à gaz comprend :
un générateur de gaz (27) ;
une turbine basse pression (50) ;
un arbre électrique (65) alimenté par ladite turbine basse pression (50), ledit arbre électrique (65) ayant une première extrémité d'arbre (65C) reliée par entraînement à ladite première charge (72) et une seconde extrémité d'arbre (65H) reliée par entraînement à ladite seconde charge (71), ladite première charge (72) et ladite seconde charge (71) étant agencées au niveau de côtés opposés de ladite turbine à gaz (23) et ledit arbre électrique (65) s'étendant axialement à travers ladite turbine à gaz (23) d'une première extrémité à une seconde extrémité associées.

2. Système selon la revendication 1, dans lequel ledit générateur de gaz (27) comprend au moins un compresseur d'air (39), une chambre de combustion (47) et une turbine haute pression (49), ladite chambre de combustion (47) étant conçue pour recevoir de l'air comprimé provenant dudit au moins un compresseur d'air (39) et des gaz de combustion de combustible générés par ladite chambre de combustion (47) se dilatant dans ladite turbine haute pression (49) ; dans lequel ledit arbre électrique (65) s'étend coaxialement par rapport audit au moins un compresseur d'air (39) et ladite turbine haute pression (49).

3. Système selon la revendication 1, dans lequel ladite turbine à gaz (23) comprend en association et séquentiellement disposés :
un compresseur basse pression (31) ;
un compresseur haute pression (39), disposé séquentiellement en aval dudit compresseur basse pression (31) pour recevoir de l'air comprimé par ledit compresseur basse pression (31) ;
une chambre de combustion (47), conçue pour recevoir de l'air comprimé en provenance dudit compresseur haute pression (39), et un combustible ;
une turbine haute pression (49) recevant des gaz de combustion provenant de ladite chambre de combustion (47) et conçue pour générer une puissance mécanique à partir desdits gaz de combustion se dilatant partiellement en son sein, ladite turbine haute pression (49) étant en communication fluidique avec ladite turbine basse pression (50), lesdits gaz de combustion provenant de ladite turbine haute pression (49) se dilatant dans ladite turbine basse pression (50) ;
un second arbre (55) reliant par entraînement ladite turbine haute pression (49) et ledit compresseur haute pression (39) ;
dans lequel ledit arbre électrique (65) et ledit second arbre (55) sont agencés coaxialement, et ledit arbre électrique (65) reliant par entraînement ladite turbine basse pression (50) et ledit compresseur basse pression (31).

4. Système selon la revendication 3, comprenant un agencement de purge d'air entre ledit compresseur basse pression (31) et ledit compresseur haute pression (39).

5. Système selon l'une quelconque des revendications précédentes, dans lequel ledit premier compresseur et éventuellement ledit second compresseur sont agencés et configurés pour traiter au moins un gaz de réfrigération dans un système de liquéfaction de gaz naturel.

6. Système selon une ou plusieurs des revendications précédentes, comprenant un système de refroidissement d'air (81) conçu pour refroidir un courant d'air entrant dans ledit générateur de gaz (27) ; dans lequel ledit système de refroidissement d'air comprend un circuit de réfrigération (83) doté d'un compresseur traitant un fluide réfrigérant circulant dans ledit circuit de réfrigération (83) ; et dans lequel ledit compresseur dudit circuit de réfrigération est relié mécaniquement à l'une desdites première extrémité d'arbre (65H) et seconde extrémité d'arbre (65C), formant l'une desdites première charge (72) et seconde charge (71) alimentées par ladite turbine à gaz (23).

7. Système selon une ou plusieurs des revendications précédentes, dans lequel ladite première extrémité d'arbre (65C) est disposée au niveau d'une extrémité froide de ladite turbine à gaz et ladite seconde extrémité d'arbre (65H) est disposée au niveau d'une extrémité chaude de ladite turbine à gaz.

8. Système selon la revendication 7 lorsqu'il dépend de la revendication 6, dans lequel ledit compresseur dudit circuit de réfrigération (83) est relié par entraînement à ladite première extrémité d'arbre (65C) au niveau de ladite extrémité froide de la turbine à gaz (23).

9. Procédé de fonctionnement d'un système de turbine à gaz comprenant une charge, le procédé comprenant les étapes suivantes :
la fourniture d'un générateur de gaz (27), d'une turbine basse pression (50) et d'un arbre électrique (65) ayant une première extrémité d'arbre (65C) et une seconde extrémité d'arbre (65H) accessibles au niveau d'une première extrémité et d'une seconde extrémité de ladite turbine à gaz (23), respectivement ;
la liaison par entraînement d'une première charge (72) à ladite première extrémité d'arbre (65C), et d'une seconde charge (71) à ladite seconde extrémité d'arbre (65H) ;
la génération d'une puissance mécanique au moyen de ladite turbine basse pression (50) ;
l'utilisation d'une première partie de ladite puissance mécanique par l'intermédiaire d'un premier couplage de charge pour entraîner ladite première charge (72) et d'une seconde partie de ladite puissance mécanique par l'intermédiaire d'un second couplage de charge pour entraîner ladite seconde charge (71) ;
dans lequel ladite première charge (72) et ladite seconde charge (71) comprennent un premier et un second compresseur, respectivement et dans lequel à la fois ledit premier compresseur et ledit second compresseur comprennent un carter divisé verticalement respectif.

10. Procédé selon la revendication 9, comprenant l'entraînement d'un compresseur d'un système de refroidissement (81) par l'intermédiaire dudit arbre électrique (65), dans lequel ledit système de refroidissement (81) comprend un compresseur accouplé par entraînement à une extrémité dudit arbre électrique (65) ; et dans lequel ledit système de refroidissement refroidit un courant d'air d'admission délivré à ladite turbine à gaz (23).
